(19) **Europäisches Patentamt**

**European Patent Office**

**Office européen des brevets**

(11) **EP 0 896 029 B1**

(12) **EUROPÄISCHE PATENTSCHRIFT**

| | |
|---|---|
| (45) Veröffentlichungstag und Bekanntmachung des Hinweises auf die Patenterteilung:<br>**31.05.2000   Patentblatt 2000/22** | (51) Int Cl.[7]: **C08L 57/00**, C08L 101/00,<br>C08K 9/04 |

(21) Anmeldenummer: **98112702.0**

(22) Anmeldetag: **09.07.1998**

(54) **Vernetzbare in Wasser redispergierbare Pulverzusammensetzung**

Crosslinkable redispersable powder composition

Composition pulvérulente reticussable et redispersable

| | |
|---|---|
| (84) Benannte Vertragsstaaten:<br>**DE FR IT** | • **Figge, Reiner, Dr.**<br>**84539 Ampfing (DE)**<br>• **Barthel, Herbert, Dr.**<br>**84547 Emmerting (DE)** |
| (30) Priorität: **31.07.1997   DE 19733157** | |
| (43) Veröffentlichungstag der Anmeldung:<br>**10.02.1999   Patentblatt 1999/06** | (74) Vertreter: **Schuderer, Michael, Dr. et al**<br>**Wacker-Chemie GmbH**<br>**Zentralabteilung Patente** |
| (73) Patentinhaber: **Wacker-Chemie GmbH**<br>**81737 München (DE)** | **Marken und Lizenzen**<br>**Hanns-Seidel-Platz 4**<br>**81737 München (DE)** |
| (72) Erfinder:<br>• **Eck, Herbert, Dr.**<br>**83646 Bad Tölz (DE)** | (56) Entgegenhaltungen:<br>**DE-A- 19 535 833** |

**Beschreibung**

Die Erfindung betrifft eine vernetzbare, in Wasser redispergierbare Pulverzusammensetzung sowie deren Verwendung.

In der EP-A 601518 werden vernetzbare, in Wasser redispergierbare Dispersionspulver auf der Basis von Carboxylgruppenhaltigen Acrylatmischpolymerisaten beschrieben, welche in Gegenwart von Polyvinylalkohol getrocknet werden und zur Vernetzung polyvalente Metallionen enthalten können. Ähnliche vernetzbare Dispersionspulver sind auch aus der US-A 3409578 bekannt, in der Pulverzusammensetzungen aus Carboxylgruppen-haltigen Polymeren und/oder carboxylgruppenhaltigen Schutzkolloiden in Gegenwart von polyvalenten Metallionen vernetzt werden. Nachteilig ist, daß derartige Zusammensetzungen mit polyvalenten Metallsalzen, welche in Gegenwart von Wasser Säure freisetzen zur vorzeitigen Vernetzung, speziell bei Kontakt mit Feuchtigkeit, neigen.

Zur Vermeidung der vorzeitigen Vernetzung wird in der EP-A 702059 (US-A 5608011) vorgeschlagen, vernetzbare Dispersionspulver von N-Methylol-haltigen Copolymerisaten mit einer Katalysatorkombination aus wasserlöslichen oder in Wasser dispergierbaren Peroxosäuresalzen bzw. Reduktionsmitteln einzusetzen. Die EP-B 687317 beschreibt in Wasser redispergierbare, vernetzbare Pulver auf der Basis von N-Methylol-funktionellen Copolymerisaten, welche in der Wärme vernetzen. Nachteilig bei dem zuletztgenannten Pulver ist die Tatsache, daß ausschließlich durch Wärme vernetzbare Pulver in vielen Anwendungen nicht eingesetzt werden können.

Aus der EP-A 723975 sind vernetzbare Dispersionspulver auf der Basis von Epoxidgruppen-haltigen Copolymerisaten bekannt. Zur Vernetzung werden externe Vernetzer, beispielsweise Polyamine, Polycarbonsäuren, hydroxyfunktionalisierte Polymere sowie polyvalente Metallsalze zugegeben. Problematisch beim Einsatz von Polyaminen oder polyvalenten Metallsalzen ist die geringe Lagerstabilität.

Aus der EP-A 721004 sind vernetzbare, redispergierbare Pulvermischungen bekannt, welche filmbildende Polymerteilchen mit mindestens einer funktionellen, vernetzbaren Gruppe enthalten. Die Vernetzerkomponente kann ein wasserlösliches oder emulgierbares Monomer oder Polymer sein, oder aber eine pulverförmige Mischung aus dem Vernetzer und einem anorganischen Träger, wie $CaCO_3$, Ton oder Siliciumdioxid. Die Bindung der Vernetzerkomponente auf diesen Trägersubstanzen ist eine physikalische Adsorption. Das hat den Nachteil, daß diese Mischungen den gleichen, wenn etwas abgeschwächten Geruch aufweisen, wie die reine Vernetzerkomponente. Zudem kann, aufgrund der schwachen physikalischen Bindung die Vernetzerkomponente abspalten und in das zu vernetzende Polymer eindringen, was insbesondere bei sehr reaktionsfähigen Substanzen, zu verminderter Lagerfähigkeit bzw. Vorvernetzungen führen kann.

Es bestand daher die Aufgabe eine vernetzbare, in Wasser redispergierbare Pulverzusammensetzung zur Verfügung zu stellen, welche sich durch hohe Lagerstabilität, Blockstabilität und Rieselfähigkeit auszeichnet.

Gegenstand der Erfindung der Erfindung ist eine vernetzbare, in Wasser redispergierbare Pulverzusammensetzung enthaltend

a) 30 bis 95 Gewichtsteile von einem oder mehreren in Wasser unlöslichen, filmbildenden Polymerisaten aus einem oder mehreren radikalisch polymerisierbaren, ethylenisch ungesättigten Monomeren,
b) 5 bis 70 Gewichtsteile von einem oder mehreren in Wasser löslichen Polymeren,
wobei zumindest einer der Polymeranteile a) und b) ein oder mehrere Comonomereinheiten mit vernetzbaren Gruppen enthält, und sich die Gewichtsteile von a) und b) auf 100 Gewichtsteile aufaddieren, und
c) 0.5 bis 30 Gew%, bezogen auf das Gesamtgewicht von a) und b), von in Wasser und in organischen Lösungsmitteln unlöslichen, anorganischen oder organischen Feststoffen mit einer mittleren Teilchengröße von 5 nm bis 100 μm, an deren Oberfläche funktionelle Gruppen chemisch gebunden sind, welche mit den vernetzbaren Gruppen der Polymerisate a) und b) kovalente Bindungen ausbilden können.

Geeignete in Wasser unlösliche, filmbildende Polymerisate enthalten eine oder mehrere Monomereinheiten aus der Gruppe der Vinylester von unverzweigten oder verzweigten Alkylcarbonsäuren mit 1 bis 15 C-Atomen, der Methacrylsäureester und Acrylsäureester von unverzweigten oder verzweigten Alkoholen mit 1 bis 12 C-Atomen, der Fumarsäure- und Maleinsäure-mono- oder -diester von unverzweigten oder verzweigten Alkoholen mit 1 bis 12 C-Atomen, der Diene wie Butadien oder Isopren, der Olefine wie Ethen oder Propen, der Vinylaromaten wie Styrol, Methylstyrol, Vinyltoluol, der Vinylhalogenide wie Vinylchlorid. Unter wasserunlöslich ist dabei zu verstehen, daß die Löslichkeit der Polymerisate unter Normalbedingungen weniger als 1 g pro Liter Wasser beträgt. Für die Filmbildung wird im allgemeinen die Polymerzusammensetzung so gewählt, daß bei der Verarbeitungstemperatur Filmbildung erfolgt, vorzugsweise so, daß eine Glasübergangstemperatur Tg von -30°C bis +80°C resultiert.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, beispielsweise VeoVa09[R] oder VeoVa10[R] (Handelsnamen der Fa. Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Bevorzugte Estergruppen der Fumar- und Maleinsäure sind Methyl-, Ethyl-, n-Propyl-, iso-Propyl-, n-Butyl-, iso-Butyl-, t-Butyl-, Hexyl-, Ethylhexyl-, und Dodecyl- Gruppe.

Geeignete Comonomere mit vernetzbaren Gruppen sind im allgemeinen solche mit funktionellen Gruppen, die über nucleophile Substitutionsreaktionen, Kondensationsreaktionen oder Additionsreaktionen vernetzen. Die vernetzbaren Gruppen werden bevorzugt durch Copolymerisation von, die gewünschten funktionellen Gruppen enthaltenden, Monomeren eingebaut. Entsprechend substituierte Comonomereinheiten können aber auch nachträglich funktionalisiert werden.

Für die Vernetzung über Kondensationsreaktionen geeignet sind Alkoxysilan-funktionelle Monomereinheiten wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy-, Methoxyethylen-, Ethoxyethylen-, Methoxypropylenglykolether- und Ethoxypropylenglykolether-Reste enthalten sein können. Bevorzugt werden Vinyltriethoxysilan und gamma-Methacryloxypropyltriethoxysilan.

Weitere Beispiele für durch Kondensationsreaktion vernetzbare Comonomere sind Acrylamidoglykolsäure (AGA), Methacrylamidoglykolsäuremethylester (MAGME), N-Methylolacrylamid (NMAA), N-Methylolmethacrylamid, N-Methylolallylcarbamat, Alkylether von N-Methylolacrylamid oder N-Methylolmethacrylamid wie deren Isobutoxyether oder n-Butoxyether.

Durch Additionsreaktionen vernetzbar sind Epoxidgruppen-haltige Comonomere wie Glycidylacrylat, Glycidylmethacrylat, Glycidylvinylether und Glycidylallylether, und Isocyanat-Monomere wie meta- und para-Isopropenyl-alpha,alpha-dimethyl-benzylisocyanat (TMI), 2-Methyl-2-isocyanatopropylmethacrylat, wobei die Isocyanatgruppen der genannten Monomere gegebenenfalls auch blockiert sein können, beispielsweise mit Phenol, Salicylsäureester, Ketoxim, Caprolactam, Malonsäuredialkylester, Acetessigsäurealkylester, 2,2-Dimethyl-1,3-dioxan-4,6-dion.

Weitere Beispiele für vernetzbare Comonomere sind Hydroxygruppen-haltige Comonomere wie Hydroxyalkylacrylate und -methacrylate, welche gegebenenfalls acetoacetyliert werden können, wie Hydroxyethyl(meth)acrylat, Hydroxypropyl(meth)acrylat und Hydroxybutyl(meth)acrylat. Geeignet sind auch Carbonsäure- oder Sulfonsäure-funktionelle Comonomere wie Vinylsulfonsäure, Acryl-, Methacryl-, Malein-, Fumar-, Croton- und Itaconsäure, die Halbester der Malein- und Fumarsäure, Monovinylbernsteinsäureester, Methylenmalonsäure. Beispiele für vernetzbare Comonomere mit Anhydridgruppen sind Allylbernsteinsäureanhydrid und Maleinsäureanhydrid.

Beispiele für vernetzbare, Carbonylgruppen enthaltende Monomereinheiten sind Vinyl- oder Allylacetoacetat, Vinyl- oder Allylbisacetoacetat, Acrolein. Beispiele für vernetzbare Monomereinheiten mit Amingruppen sind Allylamin, (Meth)acrylsäure-2-aminoethylester, Hydrazidgruppen enthaltende Verbindungen wie Acrylsäurehydrazid und Crotonsäurehydrazid. Geeignet sind auch reaktive Halogenatome enthaltende Verbindung wie Chloressigsäure-Vinylester oder -Allyester, Chlormethylstyrol, Allylchlorid oder Allylbromid, Vinylidenchlorid.

Als vernetzbare Monomereinheiten bevorzugt werden Glycidyl(meth)acrylat, meta- und para-Isopropenyl-alpha,alpha-dimethylbenzylisocyanat (TMI), Allylacetoacetat, gegebenenfalls acetoacetyliertes Hydroxyethyl(meth)acrylat bzw. Hydroxypropyl(meth)acrylat, Acrylamidoglykolsäure (AGA), Methacrylamidoglykolsäuremethylester (MAGME), N-Methylolacrylamid (NMAA), Acryl-, Methacryl-, Malein-, Fumar-, Croton- und Itaconsäure.

Die vernetzbaren Monomereinheiten sind im allgemeinen in einer Menge von 0.1 bis 10 Gew%, vorzugsweise 0.5 bis 5 Gew%, jeweils bezogen auf das Gesamtgewicht des Polymerisats a) enthalten.

Als Hilfsmonomere geeignet sind auch mehrfach ethylenisch ungesättigten Comonomere wie Ethylenglycoldiacrylat, 1,3-Butylenglycoldiacrylat, 1,4-Butylenglycoldiacrylat, Propylenglycoldiacrylat, Divinyladipat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat oder Triallylcyanurat.

Als Polymere a), welche die genannten vernetzbaren Comonomereinheiten in den angegebenen Mengen enthalten, werden bevorzugt:

Aus der Gruppe der Vinylester-Polymerisate
Vinylacetat-Polymerisate;
Vinylester-Ethylen-Copolymere wie Vinylacetat-Ethylen-Copolymere mit einem Ethylengehalt von 1 bis 60 Gew%;
Vinylester-Ethylen-Vinylchlorid-Copolymere mit einem Ethylengehalt von 1 bis 40 Gew% und einem Vinylchlorid-Gehalt von 20 bis 90 Gew%, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester, enthalten sind;
Vinylacetat-Copolymere mit 1 bis 50 Gew% eines oder mehrerer copolymerisierbarer Vinylester wie Vinyllaurat, Vinylpivalat, Vinyl-2-ethylhexansäureester, Vinylester einer alpha-verzweigten Carbonsäure, insbesonders Versaticsäure-Vinylester (VeoVa9[R], VeoVa10[R]), welche gegebenenfalls noch 1 bis 40 Gew% Ethylen enthalten;

Vinylester-Acrylsäureester-Copolymerisate mit 30 bis 90 Gew% Vinylester, insbesonders Vinylacetat, und 1 bis 60 Gew% Acrylsäureester, insbesonders n-Butylacrylat oder 2-Ethylhexylacrylat, welche gegebenenfalls noch 1 bis 40 Gew% Ethylen enthalten;

Vinylester-Acrylsäureester-Copolymerisate mit 30 bis 75 Gew% Vinylacetat, 1 bis 30 Gew% Vinyllaurat oder Vinylester einer alpha-verzweigten Carbonsäure, insbesonders Versaticsäure-Vinylester, 1 bis 30 Gew% Acrylsäureester, insbesonders n-Butylacrylat oder 2-Ethylhexylacrylat, welche gegebenenfalls noch 1 bis 40 Gew% Ethylen enthalten;

Vinylester-Copolymerisate mit Estern der Maleinsäure oder Fumarsäure wie Diisopropyl-, Di-n-butyl, Di-t-butyl-, Di-ethylhexyl-, Methyl-t-butyl-Ester, beispielsweise Vinylacetat-Copolymerisate mit 10 bis 60 Gew% eines oder mehrerer der genannten Malein-/Fumarsäure-Ester, welche gegebenenfalls noch Ethylen oder weitere copolymerisierbare Vinylester wie Vinyllaurat oder Versaticsäure-Vinylester enthalten.

Aus der Gruppe der (Meth)acrylsäurepolymerisate Polymerisate von n-Butylacrylat oder 2-Ethylhexylacrylat; Copolymerisate von Methylmethacrylat mit n-Butylacrylat und/oder 2-Ethylhexylacrylat.

Aus der Gruppe der Vinylchlorid-Polymerisate, neben den obengenannten Vinylester/Ethylen/Vinylchlorid-Copolymerisaten, Vinylchlorid-Ethylen-Copolymere und Vinylchlorid-Acrylatcopolymere.

Aus der Gruppe der Styrol-Polymerisate Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 1 bis 70 Gew%.

Als wasserlösliche Polymerisate b) werden wasserlösliche Schutzkolloide eingesetzt, welche gegebenenfalls mit Hydroxylgruppen, Mercaptogruppen, Carboxylgruppen, Amingruppen oder Carbonylgruppen funktionalisiert sind. Unter wasserlöslich ist dabei zu verstehen, daß die Löslichkeit bei Normalbedingungen mehr als 10 g pro Liter Wasser beträgt. Geeignete Schutzkolloide sind im Handel erhältlich. Soweit die funktionellen Gruppen nicht ohnehin schon in den Schutzkolloiden enthalten sind, können letztere auch nachträglich funktionalisiert werden. Mit Mercaptogruppen, Carboxylgruppen, Amingruppen oder Carbonylgruppen funktionalisierte Polyvinylalkohole sind auch durch Copolymerisation entsprechend funktionalisierter Comonomere mit Vinylacetat und anschließender Hydrolyse in dem Fachmann bekannter Weise zugänglich.

Beispiele für geeignete Schutzkolloide sind Polyvinylalkohole mit einem Gehalt von 75 bis 100 Mol%, bevorzugt 78 bis 95 Mol%, Vinylalkoholeinheiten und einem Molekulargewicht von vorzugsweise 5000 bis 200000; Polyvinylpyrrolidone mit einem K-Wert von 10 bis 120; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein, Sojaprotein, Gelatine; Ligninsulfonate; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Als Polymere b) bevorzugt werden die genannten Polyvinylalkohole, Stärken, Cellulosen, Casein, Melaminformaldehydsulfonate, Naphthalinformaldehydsulfonate, sowie aus der Gruppe der funktionalisierten Schutzkolloide, die mit Carboxylgruppen, Acetoacetylgruppen oder Aminogruppen funktionalisierten Polyvinylalkohole, und die Carboxymethyl-substituierten Stärken und Cellulosen.

Die genannten wasserlöslichen Polymere b) können während der Polymerisation des Polymeren a) als Schutzkolloide zugegeben werden, oder vor der Verdüsung der wässrigen Dispersion des Polymers a) als Verdüsungshilfe zugegeben werden, oder teilweise während der Polymerisation und der Rest vor der Verdüsung zugegeben werden.

Beispiele für funktionalisierte, in Wasser und organischen Lösungsmitteln unlösliche, anorganische Feststoffe sind funktionalisierte, feinteilige Oxide von Bor, Aluminium, Eisen, Cobalt, Chrom, Mangan, Silicium, Germanium, Zinn, Titan und Zirkonium. Geeignet sind auch deren Mischoxide wie Aluminiumsilikate, beispielsweise Schichtsilikate wie Tone, Montmorillonit. Beispiele für funktionalisierte, in Wasser und organischen Lösungsmitteln unlösliche, organische Feststoffe sind funktionalisierte, nichtaufgeschlossene Stärke- und Cellulosepulver, organische Pigmente, Ruß, Siliconharze und pulverförmige, hochvernetzte Polymere. Die mittlere Teilchengröße beträgt im allgemeinen von 5 nm bis 100 μm, bevorzugt bis 10 μm.

Bevorzugt sind Siliciumdioxide wie Kieselgele oder Kieselsäuren, Tone, Titandioxid, Siliconharze und organische Pigmente. Besonders bevorzugt werden Kieselsäuren, beispielsweise durch naßchemische Fällung hergestellte Kieselsäuren, und insbesondere pyrogen durch Flammenhydrolyse, beispielsweise von Tetrachlorsilan oder Methyltrichlorsilan oder Methyldichlorsilan, hergestellte pyrogene Kieselsäure. Die bevorzugt verwendeten Kieselsäuren weisen einen hydrodynamischen Durchmesser der Kieselsäure-Aggregate von kleiner als 10 μm, bevorzugt kleiner als 1 μm auf, insbesondere im Größenbereich 100 bis 1000 nm. Bevorzugt kommen solche zum Einsatz mit einer spezifischen Oberfläche größer als 0.1 m$^2$/g, besonders bevorzugt von 20 m$^2$/g bis 400 m$^2$/g (gemessen nach der BET Methode nach DIN 66131 und 66132) auf. Es können hydrophile und hydrophobe Kieselsäuren eingesetzt werden.

Die an der Oberfläche der Feststoff-Teilchen chemisch gebundenen, funktionellen Gruppen sind solche, die mit den vernetzbaren Gruppen des Polymerisats a) oder b) reagieren, beispielsweise Halogen-, Hydroxy-, Thiol-, Amino-, Epoxi-, Carbonsäure-, Carbonsäureanhydrid-, Carbonyl-, Hydrazid-, Aziridin- Gruppen, reaktive Methylengruppen, Gruppen mit polymerisierbaren Kohlenstoffdoppelbindungen, radikalbildende Gruppen wie Hydroperoxid-Gruppen, sowie Isocyanat-Gruppen welche gegebenenfalls blockiert sein können.

Sofern die Feststoff-Teilchen nicht von Natur aus die gewünschten funktionellen Gruppen enthalten, werden zur Funktionalisierung der Feststoffe vorzugsweise monomere, oligomere oder polymere Organosiliciumverbindungen eingesetzt, enthaltend Einheiten der Struktur $R_aR^1SiX_b$ mit a = 0, 1 oder 2, b = 1, 2, oder 3, und a + b = = 3, wobei R gleich oder verschieden ist, und einen gesättigten oder ungesättigten, aliphatischen oder einen aromatischen Kohlenwasserstoffrest mit 1 bis 18 C-Atomen bedeutet, X ein reaktiver Rest zur Anbindung an die Feststoffteilchen ist, aus der Gruppe umfassend Halogen, $-NH_2$, -OH, oder Alkoxygruppe, und $R^1$ ein funktioneller Alkyl- oder Aryl-Rest ist, der mit vernetzbaren Gruppen reagieren kann. Oligomere oder Polymere mit Einheiten der obengenannten Formel erhält man durch Kondensation über die Reste X.

Beispiele für R sind Alkylreste wie der Methylrest, der Ethylrest, Propylreste wie der iso- oder der n-Propylrest, Butylreste wie der t- oder n-Butylrest, Pentylreste wie der neo-, die iso- oder der n- Pentylrest, Hexylreste wie der n-Hexylrest, Octylreste wie der 2-Ethylhexyl- oder der n-Octylrest, Decylreste wie der n-Decylrest, Dodecylreste wie der n-Dodecylrest, Hexadecylreste wie der n-Hexadecylrest, Octadecylreste wie der n-Octadecylrest. Weitere Beispiele sind Alkenylreste wie der Vinyl-, der 2-Allyl- und der 5-Hexenylrest; oder Arylreste wie der Phenyl-, der Biphenyl- oder der Naphthenylrest; oder Alkylarylreste wie Benzyl-, Ethylphenyl-, Toluyl- oder die Xylylreste. Bevorzugtes Beispiel für R ist aus Gründen der Verfügbarkeit der Methylrest.

Die Anbindung an die Feststoffteilchen erfolgt über den Rest X, einen reaktiven Rest aus der Gruppe umfassend Halogen, $-NH_2$, -OH, oder Alkoxygruppe, vorzugsweise -Cl oder eine Alkoxygruppe mit 1 bis 8 C-Atomen, wie Methoxy-, Ethoxy-, Propoxy-, Butoxy-Gruppe. Besonders bevorzugt werden die Methoxy- und Ethoxygruppe.

Beispiele für den mit den vernetzbaren Gruppen im Polymerisat a) oder b) reagierenden Rest $R^1$ sind vorzugsweise $C_1$- bis $C_4$-Reste, welche funktionelle Gruppen enthalten, die mit den vernetzbaren Gruppen reagieren, beispielsweise Halogen-, Hydroxy-, Thiol-, Amino-, Epoxi-, Carbonsäure-, Carbonsäureanhydrid-, Carbonyl-, Hydrazid-, Aziridin-Gruppen, reaktive Methylengruppen, Gruppen mit polymerisierbaren Kohlenstoffdoppelbindungen und radikalbildende Gruppen wie Hydroperoxide, sowie Isocyanat-Gruppen welche gegebenenfalls blockiert sein können. Bevorzugte Beispiele für $R^1$ sind der Propyl-Bernsteinsäureanhydrid-, der Methacryloxypropyl-, der Glycidoxypropyl-, der Aminoethylaminopropyl-, der 3-Aminopropyl-, der 3-Hydroxy-propyl- und der 3-Chlorpropyl-Rest.

Bevorzugte Beispiele für Silyliermittel der Formel $R_aR^1SiX_b$ sind 3-Triethoxysilylpropyl-Bernsteinsäureanhydrid, Methacryloxypropyltrimethoxysilan, Glycidoxypropyltriethoxysilan, Aminoethylaminopropyltrimethoxysilan.

Die Funktionalisierung der Feststoffteilchen mittels Silylierung kann in an sich bekannter Weise in Wasser und/oder organischen Lösungsmitteln in Gegenwart von Basen erfolgen. Beispiele für geeignete Lösemittel sind aliphatische Alkohole wie Methanol, Ethanol, n-Propanol, iso-Propanol, n- oder iso-Butanol, und Alkohol/Wassergemische mit den genannten Alkoholen, sowie Ether wie Diethylether oder Tetrahydrofuran, und Ketone wie Methyl-isobutyl-Keton, und Kohlenwasserstoffe wie n-Hexan, Cyclohexan, Toluol oder Mineralöle. Geeignete Basen sind anorganische Basen wie Ammoniak, Alkali- oder Erdalkalihydroxide, Alkali- oder Erdalkalicarbonate, und organische Basen wie Alkylamine, beispielsweise Methylamine, Ethylamine, iso-Octylamine, sowie Arylamine wie Pyridin. Bevorzugt ist Ammoniak.

Übliche Mengenverhältnisse sind auf 100 Gewichtsteile Feststoffteilchen 0.5 bis 100 Gewichtsteile Silyliermittel. Es können 0.1 bis 100 Teile Wasser bzw. Lösungsmittel zugesetzt werden. Die Umsetzung des Feststoffs mit den flüssigen Reagenzien oder deren Lösung erfolgt durch intensives Vermischen. Dies kann in einem Zwangsmischer erfolgen, wie zum Beispiel vom Typ Lödige oder Henschel oder durch Fluidisieren der Kieselsäure durch mechanisches Rühren oder in einem Inertgasstrom und Zutropfen oder Zudüsen der Flüssigkeiten. Die Reaktionszeit liegt bevorzugt bei 5 bis 60 Minuten. Die Reaktionstemperaturen liegen, aus Gründen der Stabilität der Organofunktionen in der Regel niedriger als 160°C. Nach Abschluß der Silylierungsreaktion werden die funktionalisierten Feststoff-Teilchen zur Trockne gebracht.

Organische Feststoffteilchen wie organische Pigmente oder Ruß können, sofern diese nicht von Natur aus die gewünschten funktionellen Gruppen enthalten, auch mit den in der anorganischen und organischen Chemie üblichen Methoden, beispielsweise durch Substitutions-, Additions- und Kondensationsreaktionen, funktionalisiert werden. Hochvernetzte Polymere können auch mittels Copolymerisation von funktionellen Comonomeren funktionalisiert werden.

Die Herstellung der wasserunlöslichen Polymerisate a) erfolgt vorzugsweise mit dem Emulsionspolymerisationsverfahren. Diese wird im offenen Reaktionsgefäß oder in Druckgefäßen, in einem Temperaturbereich von 0°C bis 100°C durchgeführt und mit den für die Emulsionspolymerisation üblicherweise eingesetzten Methoden eingeleitet. Die Initiierung erfolgt mittels der gebräuchlichen, zumindest teilweise wasserlöslichen Radikalbildner, die vorzugsweise in Mengen von 0.01 bis 3.0 Gew% bezogen auf das Gesamtgewicht der Monomeren, eingesetzt werden. Beispiele hierfür sind Natriumpersulfat, Wasserstoffperoxid, t-Butylperoxid, t-Butylhydroperoxid; Kaliumperoxodiphosphat, Azobisisobutyronitril. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Alkaliformaldehydsulfoxylate und Ascorbinsäure. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren eingesetzt werden. Geeignete Emulgatoren sind sowohl anionische, kationische als auch nichtionische Emulgatoren. Vorzugsweise werden die Emulgatoren in einer Menge bis zu 6 Gew%, bezogen auf das Gesamtgewicht der Monomeren, eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxid-Einheiten.

Die Herstellung erfolgt vorzugsweise in Gegenwart der obengenannten Schutzkolloide. Der für die Polymerisation gewünschte pH-Bereich, der im allgemeinen zwischen 2.5 und 10, vorzugsweise 3 und 8, liegt, kann in bekannter Weise durch Säuren, Basen und übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Die Polymerisation kann, unabhängig vom gewählten Polymerisationsverfahren, diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Der Festgehalt der so erhältlichen Dispersion beträgt 20 bis 60 %. Die mittlere Teilchengröße beträgt 0.1 bis 10 µm, vorzugsweise 0.2 bis 5 µm.

Die Trocknung der Dispersion kann mittels Sprühtrocknung, Gefriertrocknung oder Wirbelschichttrocknung erfolgen. Bevorzugt wird die Sprühtrocknung in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad gewählt.

Zur Sprühtrocknung wird die Dispersion des Polymerisats a) mit einem Festgehalt von vorzugsweise 20 % bis 60 % gemeinsam mit Schutzkolloiden als Verdüsungshilfe versprüht und getrocknet werden. Als Schutzkolloide können dabei die obengenannten wasserlöslichen Polymere b) eingesetzt werden, wobei die Schutzkolloide der wässrigen Dispersion vor dem Sprühtrocknen, in Form einer wässrigen Lösung, zugegeben werden können. Bevorzugt werden bei diesem Verfahrensschritt 5 bis 20 Gew% wasserlösliches Polymer b), bezogen auf Polymer a), zugesetzt.

Die als Vernetzer wirkenden, funktionalisierten Feststoffe können bei der Sprühtrocknung coverdüst werden, wobei in diesem Fall die Versprühung durch getrennte Düsen bevorzugt wird. Ein anderes, bevorzugtes Verfahren zur Herstellung der erfindungsgemäßen Pulverzusammensetzung ist das Einmischen des funktionalisierten Feststoffs in das getrocknete Dispersionspulver am unteren Ende des Trockenturms oder in einer getrennten Vorrichtung.

In einer bevorzugten Ausführungsform enthält die Pulverzusammensetzung noch Katalysatoren zur Beschleunigung der Vernetzungsreaktion. Geeignet sind unter anderem Phasentransferkatalysatoren, beispielsweise quarternäre Ammoniumsalze wie Tetrabutylammonium-, Benzyltrimethylammonium-, Benzyltriethylammonium-, Metyltributylammonium-, Methyltrioctylammonium-Salze; quarternäre Phosphoniumsalze wie Tetrabutylphosphonium-Salze; quarternäre Pyridiniumsalze wie N-(2-Ethylhexyl)-4-(N',N'-dimethylamino)-Pyridinium-Salze. Im allgemeinen liegen diese Salze als Halogenide, beispielsweise als Chlorid oder Bromid, oder als Sulfat oder Acetat vor. Kronenether wie 18-Krone-6, Dibenzo-18-krone-Kryptofix (2.2.2), Tris-[2-(2-methoxyethoxy)ethyl]-Amin. Polyether wie Polyethylenglykole (PEG-1000, PEG-2000) oder Tris-(Dioxa-3,6-heptyl)-Amin (TDA-1), ferner Polyethylenglykol-dialkyl-Ether, Polyethylenglykol-aryl-aralkyl-Ether wie Triton[R]CF10, Polyethylenglykol-alkyl-aryl-Ether und zur Komplexbildung geeignete tertiäre Di- oder Oligoamine wie N,N,N',N'-Tetramethylethylendiamin. Aber auch andere Katalysatoren wie im Reaktionsmedium ausreichend stabile Übergangsmetallverbindungen, insbesondere Übergangsmetall-Komplexe, Säuren und Basen (beispielsweise DABCO) können zur Beschleunigung der Vernetzungsreaktion eingesetzt werden. Üblicherweise werden die Katalysatoren in einer Menge von 0.01 bis 5 Gew%, bezogen auf die Polymeranteile a) und b), zugegeben.

Gegebenenfalls als Mischung mit diesen Vernetzern können andere Zusätze der Pulvermischung zugegeben werden. Beispiele für Zusatzstoffe zur Modifizierung sind Antiblockmittel, Farbstoffe, Pigmente, Weichmacher, Verfilmungshilfsmittel, Antischaummittel, Katalysatoren, Rheologiehilfsmittel, Verdickungsmittel, Haftmittel umd Emulgatoren, wobei diese, falls sie im Originalzustand flüssig sind, vor dem Zumischen in einen pulverförmigen Zustand übergeführt werden müssen.

Die Dispersionspulverzusammensetzung kann in den dafür typischen Anwendungsbereichen eingesetzt werden. Beispielsweise in bauchemischen Produkten in Verbindung mit anorganischen, hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Fugenmörtel und Farben. Ferner als Alleinbindemittel für Beschichtungsmittel und Klebemittel oder als Bindemittel für Textilien und Papier. Vorzugsweise wird die Dispersionspulverzusammensetzung als Bindemittel in Anwendungsgebieten eingesetzt, in denen neben einer guten Haftung auch eine reduzierte Wasseraufnahme und/oder gute Lösungsmittelbeständigkeit erwünscht ist.

Bei der Verwendung von funktionalisierten Feststoffen als Vernetzer erzielt man hohe Vernetzungsgrade, die Lagerstabilität der Pulvermischungen ist ebenfalls gut, die Blockstabilität wird im allgemeinen auch ohne oder zumindest mit stark reduzierter Antiblockmittelmenge gewährleistet. Zusätzlich verbessern diese Vernetzer die Rieselfähigkeit der Mischungen. Es ist erstaunlich, daß die in Wasser und in organischen Lösemitteln unlöslichen Partikel zu einem vergleichbaren Vernetzungsgrad führen wie lösliche Produkte, obwohl das zu vernetzende Polymer ebenfalls als Partikel und nicht als Flüssigkeit vorliegt und im Reaktionsmedium (Wasser) ebenfalls unlöslich ist.

Die nachfolgenden Beispiele dienen der weiteren Erläuterung der Erfindung:

Herstellung von funktionalisierter Kieselsäure:

M001:

100 g einer pyrogenen Kieselsäure mit einer spezifischen Oberfläche nach BET von 200 $m^2$/g (Wacker-Produkt, Handelsname HDK N20) und 20 g Wasser wurden intensiv vermischt, anschließend wurde eine Mischung von 20 g iso-Propanol und 20 g 3-Triethoxysilylpropyl-Bernsteinsäureanhydrid (Wacker-Produkt, Handelsname Silan GF 20) feinverteilt zugefügt und vermischt. Nach 15 Minuten Mischen wurde das Pulver für 2 Stunden bei 150°C zur Reaktion gebracht und dabei in einem schwachen Stickstoffstrom von überschüssigem Wasser und flüchtigen Siliciumverbindugen gereinigt. Es wurde ein weißes Pulver erhalten. Kohlenstoff gemäß Elementaranalyse: 5.8 %.

M002:

100 g einer pyrogenen Kieselsäure mit einer spezifischen Oberfläche nach BET von 200 $m^2$/g (Wacker-Produkt, Handelsname HDK N20) und 20 g Wasser wurden intensiv vermischt, anschließend wurde eine Mischung von 20 g iso-Propanol und 20 g Glycidoxypropyltriethoxysilan (Wacker-Produkt, Handelsname Silan GF82) feinverteilt zugefügt und vermischt. Nach 15 Minuten Mischen wurde das Pulver für 2 Stunden bei 120°C zur Reaktion gebracht und dabei in einem schwachen Stickstoffstrom von überschüssigem Wasser und flüchtigen Siliciumverbindungen gereinigt. Es wurde ein weißes Pulver erhalten. Kohlenstoff gemäß Elementaranalyse: 5.0%.

M003:

100 g einer pyrogenen Kieselsäure mit einer spezifischen Oberfläche nach BET von 200 $m^2$/g (Wacker-Produkt, Handelsname HDK N20) und 20 g Wasser wurden intensiv vermischt, anschließend wurde eine Mischung von 20 g iso-Propanol und 20 g Aminoethylaminopropyltrimethoxysilan (Wacker-Produkt, Handelsname Silan GF91) feinverteilt zugefügt und vermischt. Nach 15 Minuten Mischen wurde das Pulver für 2 Stunden bei 150°C zur Reaktion gebracht und dabei in einem schwachen Stickstoffstrom von überschüssigem Wasser und flüchtigen Siliciumverbindungen gereinigt. Es wurde ein weißes Pulver erhalten. Kohlenstoff gemäß Elementaranalyse: 5.0 %.

M004:

100 g einer pyrogenen Kieselsäure mit einer spezifischen Oberfläche nach BET von 200 $m^2$/g (Wacker-Produkt; Handelsname HDK N20) und 20 g Wasser wurden intensiv vermischt, anschließend wurde eine Mischung von 20 g iso-Propanol und 2 g Methacryloxypropyltrimethoxysilan (Wacker-Produkt, Handelsname Silan GF 31) feinverteilt zugefügt und vermischt. Nach 15 Minuten Mischen wurde das Pulver für 2 h bei 150°C zur Reaktion gebracht und dabei in einem schwachen Stickstoffstrom von überschüssigem Wasser und flüchtigen Siliciumverbindungen gereinigt. Es wurde ein weißes Pulver erhalten. Kohlenstoff gemäß Elementaranalyse: 0.8%.

Beispiel 1:

In einem 16 l Rührautoklaven wurden 3420 g Wasser, 352 g Polyvinylalkohol mit einer Höppler-Viskosität von 4 mPas (4 %-ige Lösung in Wasser bei 20°C) und einer Verseifungszahl von 140, 50 g Dodecylbenzolsulfonat (15 %-ig in Wasser), 510 g Vinylacetat und 200 g Ethylen vorgelegt und die Mischung auf 50°C erwärmt. Dann wurden die Katalysatorlösungen, eine 6 %-ige wässrige Lösung von Natriumpersulfat und eine 3 %-ige wässrige Lösung von Natriumformaldehydsulfoxylat, eingefahren. Nach Anspringen der Polymerisation wurde die Monomerdosierung aus 2800 g Vinylacetat und 120 g Glycidylmethacrylat eingefahren. Während der Polymerisation wurden weitere 800 g Ethylen nachgedrückt. Nach Ablauf der Dosierzeit von ca. 5 h wurde 2 h nachpolymerisiert.

Der Festgehalt der Dispersion betrug 51 %. Das Polymerisat hatte einen K-Wert von 74.5, eine Tg von 4°C, und eine MFT von 0°C.

Vor der Verdüsung wurden 8.1 Gew%, bezogen auf Polymer, Polyvinylalkohol mit einer Höppler-Viskosität von 13 mPas (4 %-ige Lösung in Wasser bei 20°C) und einer Verseifungszahl von 140 sowie 0.8 Gew%, bezogen auf Polymer, Polyvinylalkohol mit einer Höppler-Viskosität von 5 mPas (4 %-ige Lösung in Wasser bei 20°C) und einer Verseifungszahl von 140 in Form von wässrigen Lösungen zugegeben. Der Festgehalt der zu verdüsenden Mischung betrug 35 Gew%. Die Trocknung erfolgte in einem Nubilosa-Sprühtrockner bei einer Austrittstemperatur von 82°C und einem Preßluftdruck vor der 2-Stoffdüse von 4 bar.

Nach der Verdüsung wurde funktionalisierte Kieselsäure in der in der Tabelle angegebenen Art und Menge zum Pulver zugemischt.

Beispiel 2:

In einem 16 l Rührautoklaven wurden 2000 g Wasser und 487 g Polyvinylalkohol mit einer Höppler-Viskosität von 4 mPas (4 %-ige Lösung in Wasser bei 20°C) und einer Verseifungszahl von 140 vorgelegt, auf 50°C erwärmt und Ethylen bis 60 bar aufgedrückt. Dieser Druck wurde während der gesamten Dosierzeit der Monomeren beibehalten. Die Katalysatordosierungen, eine 2.6 %-ige wässrige Lösung von t-Butylhydroperoxid und eine 4.5 %-ige wässrige Natriumformaldehydsulfoxylatlösung, wurden gleichzeitig mit der Monomerdosierung eingefahren. Die Monomerlösung bestand aus 4563 g Vinylchlorid, 1950 g Vinylacetat sowie 200 g Glycidylacrylat. Nach Reaktionsbeginn wurde innerhalb von 6 bis 7 Stunden eine Lösung von 667 g Polyvinylalkohol mit einer Höppler-Viskosität von 4 mPas (4 %-ige Lösung in Wasser bei 20°C) und einer Verseifungszahl von 140 in 3937 g Wasser dosiert. Die Dosierzeit der Monomermischung betrug 8 h. Nach Abschluß der Dosierung wurde 2 Stunden nachpolymerisiert.

Der Festgehalt betrug 50.2 %. Die Tg des Polymers betrug 13.5 °C.

Vor der Verdüsung wurden 8.1 Gew%, bezogen auf Polymer, Polyvinylalkohol mit einer Höppler-Viskosität von 13 mPas (4 %-ige Lösung in Wasser bei 20°C) und einer Verseifungszahl von 140 sowie 0.8 Gew%, bezogen auf Polymer, Polyvinylalkohol mit einer Höppler-Viskosität von 5 mPas (4 %-ige Lösung in Wasser bei 20°C) und einer Verseifungszahl von 140 in Form von wässrigen Lösungen zugegeben. Die Trocknung erfolgte wie im Beispiel 1 in einem Nubilosa-Sprühtrockner.

Nach der Verdüsung wurde funktionalisierte Kieselsäure in der in der Tabelle angegebenen Art und Menge zum Pulver zugemischt.

Prüfung der Pulvermischungen:

Bestimmung der Vernetzung:

Eine bei Raumtemperatur getrocknete Filmprobe wurde in einem für die unvernetzte Probe geeigneten Lösungsmittel, im allgemeinen Dimethylformamid, 5 Minuten bei 170°C in der Mikrowelle erhitzt.

Die Auswertung erfolgte durch eine Festgehaltsbestimmung der gesiebten Flüssigkeit

$$\text{Vernetzungsgrad } ( \% ) = \frac{\text{FG gemessen}}{\text{FG theoretisch}} - 1 \times 100$$

Bestimmung der Rieselfähigkeit:

Zur Bestimmung der Rieselfähigkeit wurde gemäß DIN 53916 in einem trichterförmigen Gefäß mit 50 ml Inhalt und einer Auslaufdüse mit einem Durchmesser von 8 mm das zu untersuchende Pulver eingefüllt und mit einem Glasstab die Oberfläche glatt abgestreift. Nach dem öffnen der Auslaufklappe wurde die Auslaufzeit des Pulvers im Trichter bestimmt. Die Rieselfähigkeit wurde qualitativ beurteilt.

Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt.

Die Blockstabilität wurde wie folgt klassifiziert:

A = blockstabil

B = mäßig blockstabil

C = nicht blockstabil.

Bestimmung der Redispergierbarkeit der Filme:

Zur Bestimmung des Vernetzungsgrades der Filme wurde auf die jeweiligen mit der Redispersion hergestellten Filme ein Wassertropfen aufgetragen und nach 60 Sekunden Einwirkzeit durch Reiben mit der Fingerkuppe die Redispergierbarkeit der Filme geprüft.

Auswertung der Film-Redispergierbarkeit:

Note 1: sehr gut redispergierbar
Film läßt sich durch ganz leichtes Reiben sofort redispergieren oder redispergiert bereits selbständig.

Note 2: gut redispergierbar
Film läßt sich durch Reiben gut redispergieren; Filmstücke möglich, aber wenig und sehr leicht zwischen Fingern redispergierbar.

Note 3: etwas redispergierbar
Film läßt sich nur durch kräftiges Reiben redispergieren; Unterlage wird nur langsam unter Filmzerstörung (Filmstücke) erreicht; Filmstücke nicht redispergierbar.

Note 4: nicht redispergierbar
Film läßt sich auch durch längeres kräftiges Reiben nicht redispergieren; Film zerfällt ohne zu redispergieren in Filmstücke oder löst sich vom Untergrund.

Die Ergebnisse der Testung sind in der nachfolgenden Tabelle zusammengefaßt:

Der Vergleich von Vergleichsbeispiel 1 mit Beispiel 2 zeigt, daß mit den erfindungsgemäßen Zusammensetzungen Pulver erhalten werden, deren Blockfestigkeit und Rieselfähigkeit, trotz des Gehalts an Vernetzer verbessert ist. Der hohe Absitz nach 24 h bei Beispiel 2 zeigt eine Vernetzung des Schutzkolloids an.

Der Vergleich von Beispiel 2 mit Beispiel 3 zeigt, daß bei Zusatz von Katalysator die Vernetzung zunimmt, wobei die Verbesserung des Absitz nach 24 h zeigt, daß das Schutzkolloid nicht vernetzt wird.

Aus Beispiel 4 und Vergleichsbeispiel 3 wird deutlich, daß im Vergleich zu Zusammensetzungen mit herkömmlichen Vernetzern, mit den erfindungsgemäßen Zusammensetzungen Pulver mit höherer Blockfestigkeit und Rieselfähigkeit erhalten werden. Obwohl die funktionalisierten Feststoffteilchen nicht löslich sind, wird der Vernetzungsgrad bei Vernetzung im wässrigen Milieu nicht reduziert.

Die Verbesserung von Absitz und und Vernetzungsgrad bei Einsatz von Katalysator wird durch den Vergleich von Beispiel 4 mit Beispiel 6 bestätigt.

**Tabelle:**

| Versuch Nr. | Vgl. 1 | 1 | 2 | Vgl. 2 | 3 | 4 | Vgl. 3 | 5 | 6 |
|---|---|---|---|---|---|---|---|---|---|
| Beispiel Nr | 1 | 1 | 1 | 2 | 2 | 2 | 2 | 1 | 2 |
| Zusatz  Art | - | M001 | M003 | - | M001 | M003 | HMM | M003+DABCO | M003+DABCO |
| % | - | 5 | 2.5 | - | 3 | 3 | 0.5 | 2.5 + 1 | 5 + 1 |
| Blockfestigkeit | B | A | A | A-B | A | A | B | A | A |
| Rieselfähigkeit | gut | sehr gut | sehr gut | gut | sehr gut | sehr gut | noch gut | sehr gut | sehr gut |
| Absitz 1 h | - | > 7 | 0.2 | 0.2 | 0.2 | 0.3 | 0.2 | 0.1 | 0.2 |
| Absitz 24 h | 1.4 | > 7 | 3.4 | 1.8 | 1.7 | 2.1 | 2.2 | 0.4 | 0.7 |
| Redisp.barkeit (Film 1 h 90°C) | 2 | 3 | 3 | 1 | 2-3 | 2 | 2-3 | 3-4 | 4 |
| Vernetzung (%) | 29.9 | 54.4 | 46.2 | 12.5 | 41.4 | 39.5 | 45.6 | 67.7 | 80.6 |

HMM = Hexamethylendiamin; DABCO = Triethylendiamin

EP 0 896 029 B1

**Patentansprüche**

1.  Vernetzbare, in Wasser redispergierbare Pulverzusammensetzung enthaltend

    a) 30 bis 95 Gewichtsteile von einem oder mehreren in Wasser unlöslichen, filmbildenden Polymerisaten aus einem oder mehreren radikalisch polymerisierbaren, ethylenisch ungesättigten Monomeren, deren Löslichkeit unter Normalbedingungen weniger als 1 g pro Liter Wasser beträgt,
    b) 5 bis 70 Gewichtsteile von einem oder mehreren in Wasser löslichen Polymeren, deren Löslichkeit bei Normalbedingungen mehr als 10 g pro Liter Wasser beträgt,
    wobei zumindest einer der Polymeranteile a) und b) ein oder mehrere Comonomereinheiten mit vernetzbaren Gruppen enthält, und sich die Gewichtsteile von a) und b) auf 100 Gewichtsteile aufaddieren, und
    c) 0.5 bis 30 Gew%, bezogen auf das Gesamtgewicht von a) und b), von in Wasser und in organischen Lösungsmitteln unlöslichen, anorganischen oder organischen Feststoffen mit einer mittleren Teilchengröße von 5 nm bis 100 μm, an deren Oberfläche funktionelle Gruppen chemisch gebunden sind, welche mit den vernetzbaren Gruppen der Polymerisate a) und b) kovalente Bindungen ausbilden können.

2.  Vernetzbare, in Wasser redispergierbare Pulverzusammensetzung nach Anspruch 1, enthaltend als Polymer a) Polymerisate mit einer oder mehreren Monomereinheiten aus der Gruppe der Vinylester von unverzweigten oder verzweigten Alkylcarbonsäuren mit 1 bis 15 C-Atomen, der Methacrylsäureester und Acrylsäureester von unverzweigten oder verzweigten Alkoholen mit 1 bis 12 C-Atomen, der Fumarsäure- und Maleinsäuremono- oder -diester von unverzweigten oder verzweigten Alkoholen mit 1 bis 12 C-Atomen, der Diene, der Olefine, der Vinylaromaten, und der Vinylhalogenide.

3.  Vernetzbare, in Wasser redispergierbare Pulverzusammensetzung nach Anspruch 1 oder 2, wobei das Polymer a) ein oder mehrere vernetzbare Monomereinheiten aus der Gruppe der Alkoxysilan-, Epoxid-, Isocyanat-, Amido-, Hydroxy-, Carbonsäure-, Sulfonsäure-, Carbonyl-, Amino-, Hydrazid-Gruppen-haltigen Monomere enthält.

4.  Vernetzbare, in Wasser redispergierbare Pulverzusammensetzung nach Anspruch 1 bis 3, wobei als Polymere b) wasserlösliche Schutzkolloide enthalten sind, welche gegebenenfalls mit Hydroxylgruppen, Mercaptogruppen, Carboxylgruppen, Amingruppen oder Carbonylgruppen funktionalisiert sind.

5.  Vernetzbare, in Wasser redispergierbare Pulverzusammensetzung nach Anspruch 1 bis 4, dadurch gekennzeichnet, daß ein oder mehrere Feststoffe aus der Gruppe der funktionalisierten, feinteiligen Oxide von Bor, Aluminium, Eisen, Cobalt, Chrom, Mangan, Silicium, Germanium, Zinn, Titan und Zirkonium, deren Mischoxide, der funktionalisierten, nichtaufgeschlossenen Stärke- und Cellulosepulver, organische Pigmente, Ruß, Siliconharze und pulverförmige, hochvernetzte Polymere enthalten sind.

6.  Vernetzbare, in Wasser redispergierbare Pulverzusammensetzung nach Anspruch 1 bis 5, dadurch gekennzeichnet, daß funktionalisierte Siliciumdioxide wie Kieselgele oder Kieselsäuren enthalten sind.

7.  Vernetzbare, in Wasser redispergierbare Pulverzusammensetzung nach Anspruch 1 bis 6, dadurch gekennzeichnet, daß die an der Oberfläche der Feststoff-Teilchen chemisch gebundenen, funktionellen Gruppen ein oder mehrere aus der Gruppe sind, umfassend Halogen-, Hydroxy-, Thiol-, Amino-, Epoxi-, Carbonsäure-, Carbonsäureanhydrid-, Carbonyl-, Hydrazid-, Aziridin-Gruppen, reaktive Methylengruppen, Gruppen mit polymerisierbaren Kohlenstoffdoppelbindungen, radikalbildende Gruppen wie Hydroperoxid-Gruppen, sowie Isocyanat-Gruppen welche gegebenenfalls blockiert sein können.

8.  Vernetzbare, in Wasser redispergierbare Pulverzusammensetzung nach Anspruch 7, dadurch gekennzeichnet, daß
    die die funktionalisierten Festoffe erhältlich sind mittels Umsetzung der Feststoffe mit monomeren, oligomeren oder polymeren Organsiliciumverbindungen, enthaltend Einheiten der Struktur $R_aR^1SiX_b$ mit a = 0, 1 oder 2, b = 1, 2, oder 3, und a + b = 3, wobei R gleich oder verschieden ist, und einen gesättigten oder ungesättigten, aliphatischen oder einen aromatischen Kohlenwasserstoffrest mit 1 bis 18 C-Atomen bedeutet, X ein reaktiver Rest ist, aus der Gruppe umfassend Halogen, $-NH_2$, -OH, oder Alkoxygruppe, und $R^1$ ein funktioneller Alkyl- oder Aryl-Rest ist.

9.  Vernetzbare, in Wasser redispergierbare Pulverzusammensetzung nach Anspruch 1 bis 8, enthaltend einen Katalysator aus der Gruppe der quarternären Ammoniumsalze, der qarternären Phosphoniumsalze, der quarternären Pyridiniumsalze, der Kronenether, der Polyether, der Polyethylenglykol-dialkyl-Ether, der Polyethylenglykol-aryl-aralkyl-Ether, der Polyethylenglykol-alkyl-aryl-Ether, der zur Komplexbildung geeigneten tertiäre Di- oder Oligoamine, der Übergangsmetallverbindungen, der Säuren und Basen.

10. Verwendung der vernetzbaren, in Wasser redispergierbaren Pulverzusammensetzungen nach Anspruch 1 bis 9 als Komponente für die Herstellung von Bauklebern, Putzen, Spachtelmassen, Fußbodenspachtelmassen, Fugenmörtel, Farben, als Alleinbindemittel für Beschichtungsmittel und Klebemittel oder als Bindemittel für Textilien und Papier.

**Claims**

1. Crosslinkable powder composition which is redispersible in water and comprises

    a) from 30 to 95 parts by weight of one or more water-insoluble, film-forming polymers of one or more free-radically polymerizable, ethylenically unsaturated monomers, the solubility of which, under standard conditions, is less than 1 g per litre of water,
    b) from 5 to 70 parts by weight of one or more water-soluble polymers, the solubility of which, under standard conditions, is more than 10 g per litre of water,
    where at least one of the polymer components a) and b) comprises one or more comonomer units containing crosslinkable groups, and the parts by weight of a) and b) add up to 100 parts by weight, and
    c) from 0.5 to 30% by weight, based on the total weight of a) and b), of inorganic or organic solids which are insoluble in water and in organic solvents and have a mean particle size of from 5 nm to 100 µm, which solids have, chemically bound to their surface, functional groups capable of forming covalent bonds with the crosslinkable groups of the polymers a) and b).

2. Crosslinkable powder composition which is redispersible in water according to Claim 1, comprising as polymer a) polymers comprising one or more monomer units selected from the group consisting of vinyl esters of unbranched or branched alkylcarboxylic acids having from 1 to 15 carbon atoms, methacrylic and acrylic esters of unbranched or branched alcohols having from 1 to 12 carbon atoms, fumaric and maleic monoesters or diesters of unbranched or branched alcohols having from 1 to 12 carbon atoms, dienes, olefins, vinylaromatics and vinyl halides.

3. Crosslinkable powder composition which is redispersible in water according to Claim 1 or 2, wherein polymer a) comprises one or more crosslinkable monomer units selected from the group consisting of monomers containing alkoxysilane, epoxide, isocyanate, amido, hydroxy, carboxyl, sulphonic acid, carbonyl, amino or hydrazide groups.

4. Crosslinkable powder composition which is redispersible in water according to any of Claims 1 to 3, comprising as polymer b) water-soluble protective colloids which may, if desired, be functionalized by hydroxyl groups, mercapto groups, carboxyl groups, amine groups or carbonyl groups.

5. Crosslinkable powder composition which is redispersible in water according to any of Claims 1 to 4, characterized in that it comprises one or more solids selected from the group consisting of functionalized, finely divided oxides of boron, aluminium, iron, cobalt, chromium, manganese, silicon, germanium, tin, titanium and zirconium, their mixed oxides, functionalized unhydrolysed starch and cellulose powders, organic pigments, carbon black, silicone resins and pulverulent, highly crosslinked polymers.

6. Crosslinkable powder composition which is redispersible in water according to any of Claims 1 to 5, characterized in that it comprises functionalized silicon dioxides such as silica gels or silicas.

7. Crosslinkable powder composition which is redispersible in water according to any of Claims 1 to 6, characterized in that the functional groups which are chemically bound to the surface of the solid particles are one or more selected from the group consisting of halogen, hydroxy, thiol, amino, epoxy, carboxyl, carboxylic anhydride, carbonyl, hydrazide and aziridine groups, reactive methylene groups, groups containing polymerizable carbon double bonds, free-radical-forming groups such as hydroperoxide groups, and isocyanate groups which may, if desired, be blocked.

8. Crosslinkable powder composition which is redispersible in water according to Claim 7, characterized in that the functionalized solids are obtainable by reacting the solids with monomeric, oligomeric or polymeric organosilicon compounds comprising units of the structure $R_aR^1SiX_b$ in which a = 0, 1 or 2, b = 1, 2 or 3 and a + b = 3, where R are identical or different and are each a saturated or unsaturated, aliphatic or aromatic hydrocarbon radical having from 1 to 18 carbon atoms, X is a reactive radical selected from the group consisting of halogen, $-NH_2$, -OH and alkoxy, and $R^1$ is a functional alkyl or aryl radical.

9. Crosslinkable powder composition which is redispersible in water according to any of Claims 1 to 8, comprising a catalyst selected from the group consisting of quaternary ammonium salts, quaternary phosphonium salts, quaternary pyridinium salts, crown ethers, polyethers, polyethylene glycol dialkyl ethers, polyethylene glycol aryl aralkyl ethers, polyethylene glycol alkyl aryl ethers, tertiary diamines or oligoamines suitable for complex formation, transition metal compounds, acids and bases.

10. Use of the crosslinkable powder compositions which are redispersible in water according to any of Claims 1 to 9 as a component for producing building adhesives, plasters and renders, knifing fillers, screeds, jointing mortars, paints, as sole binder for coating compositions and adhesives or as binder for textiles and paper.

## Revendications

1. Composition pulvérulente réticulable redispersable dans l'eau, contenant

   a) de 30 à 95 parties en poids d'un ou de plusieurs polymères filmogènes insolubles dans l'eau à base d'un ou de plusieurs monomères éthyléniquement insaturés polymérisables par voie radicalaire, dont la solubilité dans des conditions normales est inférieure à 1 g par litre d'eau,
   b) de 5 à 70 parties en poids d'un ou de plusieurs polymères hydrosolubles dont la solubilité dans des conditions normales est supérieure à 10 g par litre d'eau,
   au moins l'une des fractions polymères a) et b) renfermant un ou plusieurs motifs comonomères ayant des groupes réticulables, et la somme des parties en poids de a) et b) étant de 100 parties en poids, et
   c) de 0,5 à 30% en poids, par rapport au poids total de a) et b), de matières solides inorganiques ou organiques insolubles dans l'eau et les solvants organiques, ayant une taille de particule moyenne de 5 nm à 100 µm, à la surface desquelles des groupes fonctionnels sont liés chimiquement, lesquels peuvent former des liaisons covalentes avec les groupes réticulables des polymères a) et b).

2. Composition pulvérulente réticulable redispersable dans l'eau selon la revendication 1, contenant, en tant que polymère a), des polymères ayant un ou plusieurs motifs monomères parmi le groupe des esters vinyliques d'acides alkylcarboxyliques non ramifiés ou ramifiés ayant de 1 à 15 atomes de carbone, des méthacrylates et acrylates d'alcools non ramifiés ou ramifiés ayant de 1 à 12 atomes de carbone, des monoesters ou diesters de l'acide fumarique et de l'acide maléique et d'alcools non ramifiés ou ramifiés ayant de 1 à 12 atomes de carbone, des diènes, des oléfines, des composés vinyles aromatiques et des halogénures de vinyle.

3. Composition pulvérulente réticulable redispersable dans l'eau selon la revendication 1 ou 2, dans laquelle le polymère a) comprend un ou plusieurs motifs monomères réticulables parmi le groupe des monomères renfermant des groupes alcoxysilane, époxy, isocyanate, amido, hydroxy, acide carboxylique, acide sulfonique, carbonyle, amino, hydrazide.

4. Composition pulvérulente réticulable redispersable dans l'eau selon les revendications 1 à 3, dans laquelle des colloïdes protecteurs hydrosolubles sont présents en tant que polymères b), lesquels sont éventuellement fonctionnalisés avec des groupes hydroxy, des groupes mercapto, des groupes carboxy, des groupes amino ou des groupes carbonyle.

5. Composition pulvérulente réticulable redispersable dans l'eau selon les revendications 1 à 4, caractérisée en ce que une ou plusieurs matières solides parmi le groupe des oxydes fonctionnalisés, à fines particules, de bore, d'aluminium, de fer, de cobalt, de chrome, de manganèse, de silicium, de germanium, d'étain, de titane et de zirconium, de leurs oxydes mixtes, des poudres d'amidon et de cellulose fonctionnalisées non hydrolysées, des pigments organiques, du noir de carbone, des résines siliconées et des polymères pulvérulents hautement réticulés.

6. Composition pulvérulente réticulable redispersable dans l'eau selon les revendications 1 à 5, caractérisée en ce que des dioxydes de silicium fonctionnalisés, tels que des gels de silice ou des acides siliciques, sont présents.

**7.** Composition pulvérulente réticulable redispersable dans l'eau selon les revendications 1 à 6, caractérisée en ce que les groupes fonctionnels liés chimiquement à la surface des particules solides sont un ou plusieurs parmi le groupe constitué de groupes halogéno, hydroxy, thiol, amino, époxy, acide carboxylique, anhydride carboxylique, carbonyle, hydrazide, aziridine, de groupes méthylène réactifs, de groupes ayant des doubles liaisons carbonées polymérisables, de groupes générateurs de radicaux tels que des groupes hydroperoxyde, ainsi que de groupes isocyanate qui peuvent éventuellement être bloqués.

**8.** Composition pulvérulente réticulable redispersable dans l'eau selon la revendication 7, caractérisée en ce que les matières solides fonctionnalisées peuvent être obtenues par réaction des matières solides avec des composés organosiliciés monomères, oligomères ou polymères, renfermant des motifs de structure $R_aR^1SiX_b$ où a = 0, 1 ou 2, b = 1, 2 ou 3, et a + b = 3, R étant identique ou différent et représentant un radical hydrocarboné aliphatique saturé ou insaturé, ou aromatique, ayant de 1 à 18 atomes de carbone, X étant un radical réactif parmi le groupe constitué d'un halogène, de -NH$_2$, de -OH ou d'un groupe alcoxy, et $R^1$ étant un radical alkyle ou aryle fonctionnel.

**9.** Composition pulvérulente réticulable redispersable dans l'eau selon les revendications 1 à 8, contenant un catalyseur parmi le groupe des sels d'ammonium quaternaires, des sels de phosphonium quaternaires, des sels de pyridinium quaternaires, des éther-couronnes, des polyéthers, des éthers dialkyliques de polyéthylèneglycol, des éthers arylaralkyliques de polyéthylèneglycol, des éthers alkylaryliques de polyéthylèneglycol, des diamines ou oligoamines tertiaires appropriées pour la formation de complexes, des composés de métaux de transition, des acides et des bases.

**10.** Utilisation des compositions pulvérulentes réticulables redispersables dans l'eau selon les revendications 1 à 9, en tant que composant pour la production d'adhésifs de construction, d'enduits crépis, de mastics bouche-pores, de mastics pour planchers, de mortiers à joints, de peintures, en tant que liant unique pour des compositions de revêtements et des adhésifs ou en tant que liant pour textiles et papier.